# EUROPÄISCHE PATENTSCHRIFT

(11) **EP 0 686 112 B1**
(45) Veröffentlichungstag und Bekanntmachung des Hinweises auf die Patenterteilung: **23.10.1996**
(21) Anmeldenummer: 94907492.6
(22) Anmeldetag: 11.02.1994
(51) Int. Cl.: B62K 5/04

(54) **DREIRAD**
TRICYCLE
TRICYCLE

(30) Priorität: 04.03.1993 DE 4307269
(43) Veröffentlichungstag der Anmeldung: 13.12.1995
(73) Patentinhaber: NEHRKE, Egon, D-13507 Berlin (DE)
(72) Erfinder: NEHRKE, Egon, D-13507 Berlin (DE)
(74) Vertreter: Jander, Dieter, Dipl.-Ing.
(86) Internationale Anmeldenummer: DE9400160
(87) Internationale Veröffentlichungsnummer: WO9420356

(56) Entgegenhaltungen:
- DE-A- 4 124 926
- DE-U- 9 211 853
- US-A- 4 887 829

## Beschreibung

Die Erfindung bezieht sich auf ein Dreirad, bestehend aus einem Rad vorn, zwei hinten nebeneinander angeordneten Rädern, einem ersten vor der Hinterradachse angeordneten Träger zwischen diesen Rädern, der diese hält, einem Gestell mit einem Sattel, das über zwei Lager um eine etwa horizontale Achse schwenkbar mit dem Träger verbunden ist, einer Gepäckaufnahme zwischen den Hinterrädern und einem Antrieb für die Hinterräder, wobei letzterer ein vorderes, erstes, am Gestell gelagertes Zahnrad, mindestens ein dahinter befindliches zweites, am Gestell gelagertes Zahnrad, eine diese beiden Zahnräder umlaufende Kette, ein mit dem zweiten Zahnrad drehfest verbundenes, auf derselben Welle sitzendes drittes Zahnrad, ein auf der Welle der Hinterräder sitzendes viertes Zahnrad und eine das dritte und das vierte Zahnrad umlaufende Kette aufweist und wobei ein erstes Lager der beiden Lager zwischen Gestell und erstem Träger sitzt.

Bei einem bekannten Dreirad dieser Art (DE-OS 41 24 926) ragt vom ersten Träger ein zweiter Träger nach vorn, und an diesem sitzt das zweite Lager. Das dritte und vierte Zahnrad sind nicht am Gestell, sondern am ersten Träger gelagert. Das vierte Zahnrad treibt die Hinterräder über starre Wellenstücke an, die starr mit dem vierten Zahnrad verbunden sind. Hinzu kommt folgendes: Das zweite Zahnrad (in der Regel ein Zahnrad eines Zahnradsatzes) muß auf der dem dritten Zahnrad abgewandten Seite gelagert sein. Das macht seinen Wechsel umständlich.

Der Erfindung liegt die Aufgabe zugrunde, das eingangs erwähnte Dreirad derart auszubilden, daß es benutzerfreundlicher ist, d.h. daß es einerseits kürzer als das bekannte Fahrrad ist und daß andererseits ein Wechsel des zweiten Zahnrades bzw. des Zahnradsatzes einfacher ist als im bekannten Fall.

Diese Aufgabe wird erfindungsgemäß dadurch gelöst, daß ein zweiter Träger hinter der Hinterradachse vorhanden ist, der mit dem ersten Träger einen die Räder tragenden Rahmen bildet, daß das zweite Lager zwischen Gestell und zweitem Träger sitzt, daß das dritte und vierte Zahnrad am Gestell gelagert sind und auf der Schwenkachse der beiden Lager liegen und daß das vierte Zahnrad die Hinterräder über je eine Welle antreibt, die über Universalgelenke mit dem vierten Zahnrad und einem Hinterrad verbunden ist und aus zwei drehfest ineinandersteckenden, zueinander verschieblichen Teilen besteht.

Auf diese Weise wird das Fahrrad kürzer. Man kann sich das folgendermaßen vorstellen: Bei dem Schritt vom Gegenstand der DE-OS 41 24 926 zum Erfindungsgegenstand kommt gewissermaßen das vordere Lager zwischen Gestell und Rahmen nach hinten, so daß der Abstand zwischen Hinterradachse und Achse des ersten Zahnrades um die Längsausdehnung dieses Lagers schrumpft. Zwar verlängert sich beim erfindungsgemäßen Rad hinten der Rahmen praktisch um dieses Stück, da aber die Hinterräder viel weiter nach hinten ausladen, wirkt sich diese Verlängerung des Fahrradmittelteils nicht störend aus.

Hinzu kommt, daß das zweite Zahnrad bzw. der dieses Zahnrad aufweisende Zahnradsatz nur auf der dem dritten Zahnrad zugewandten Seite gelagert ist. Ein Wechsel des Zahnrades bzw. des Zahnradsatzes ist demgemäß einfacher möglich als im bekannten Fall.

Eine Weiterentwicklung der Erfindung besteht darin, daß die beiden Lager an einem dritten Träger befestigt sind, der am Gestell befestigt ist und nach hinten ragt.

Ferner wird vorgeschlagen, daß der dritte Träger aus vier in Längsrichtung verlaufenden Holmen, aus zwei quer dazu angeordneten Platten, zwischen denen die Holme verlaufen und die die gestellfesten Lagerteile der Lager tragen, und aus zwei quer zur Achse des vierten Zahnrades angeordneten Platten besteht, die an den Holmen befestigt sind und das vierte Zahnrad halten, wobei die das vierte Zahnrad haltenden Platten in Längsrichtung kürzer sind als die Holme derart, daß Platz für die Träger vorhanden ist.

Weiterhin wird vorgeschlagen, daß die beiden Träger des Rahmens dicht neben den beiden Rädern enden.

Ferner ist es zweckmäßig, wenn das Gestell eine Ausnehmung bildet, in der sich das dritte Zahnrad befindet, und daß sich das zweite Zahnrad (die zweiten Zahnräder) außerhalb dieser Ausnehmung befindet (befinden).

Schließlich ist es vorteilhaft, wenn ein Mechanismus vorgesehen ist, mit dem die Verschwenkbarkeit zwischen Gestell und Rahmen verhindert werden kann.

Weitere Einzelheiten der Erfindung ergeben sich aus der Zeichnung. Darin zeigen:
Fig. 1 eine Ausführungsform der Erfindung,
Fig. 2 eine Ansicht der Ausführungsform gemäß Fig. 1 gemäß Pfeil 25 in Fig. 1,
Fig. 3 eine Ansicht des hinteren mittleren Teils der Ausführungsform gemäß Fig. 1 gemäß Pfeil 26 in Fig. 1 und
Fig. 4 einen Feststellmechanismus.

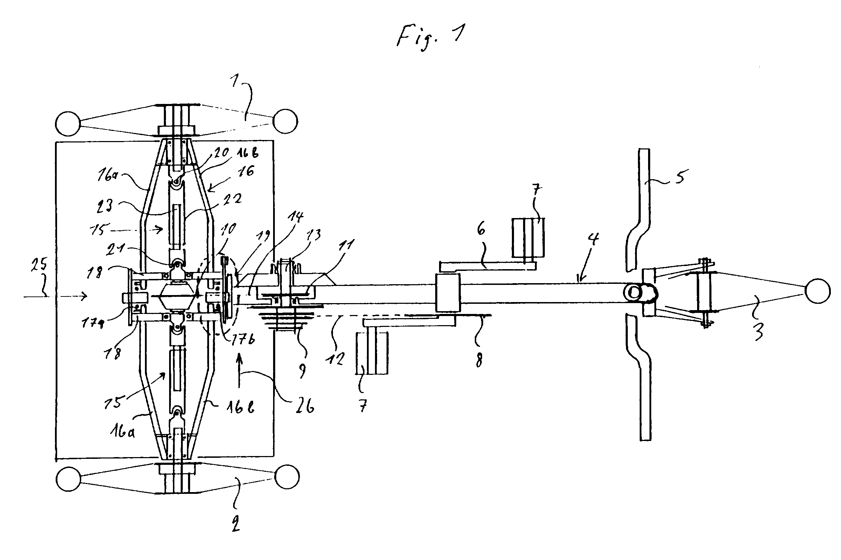

In Figur 1 ist (sind) mit 1 ein erstes Hinterrad, mit 2 ein zweites Hinterrad, mit 3 ein Vorderrad, mit 4 ein Gestell, mit 5 eine Lenkstange, mit 6 eine Tretkurbel, mit 7 Pedale , mit 8 ein erstes Zahnrad, mit 9 mehrere zweite Zahnräder, mit 10 ein viertes Zahnrad und mit 11 ein drittes Zahnrad bezeichnet.

Das erste Zahnrad 8 treibt über eine Kette 12 ein Zahnrad 9 an. Dieses treibt über eine Welle 13 das dritte Zahnrad 11 an, das seinerseits über eine Kette 14 das vierte Zahnrad 10 antreibt. Dieses treibt über je eine Welle 15 die Hinterräder 1,2 an.

Die Hinterräder 1,2 sind in einem Rahmen 16 gelagert, der aus zwei Trägern 16a und 16b besteht. Der Rahmen 16a,16b ist über Lager 17a,17b an einem dritten Träger 18 gelagert, der bei 19 an dem Gestell 4 befestigt ist. Der Rahmen 16a,16b ist also an dem Gestell 4 um eine horizontale Achse, die durch die beiden Lager 17a,17b läuft, schwenkbar gelagert.

Das vierte Zahnrad 10 sitzt nicht verschwenkbar an dem Gestell 4.

Eine Welle 15 besteht aus zwei Universalgelenken 20 und 21 und zwei teleskopartig drehfest ineinandersteckenden, zueinander verschieblichen Teilen 22 und 23.

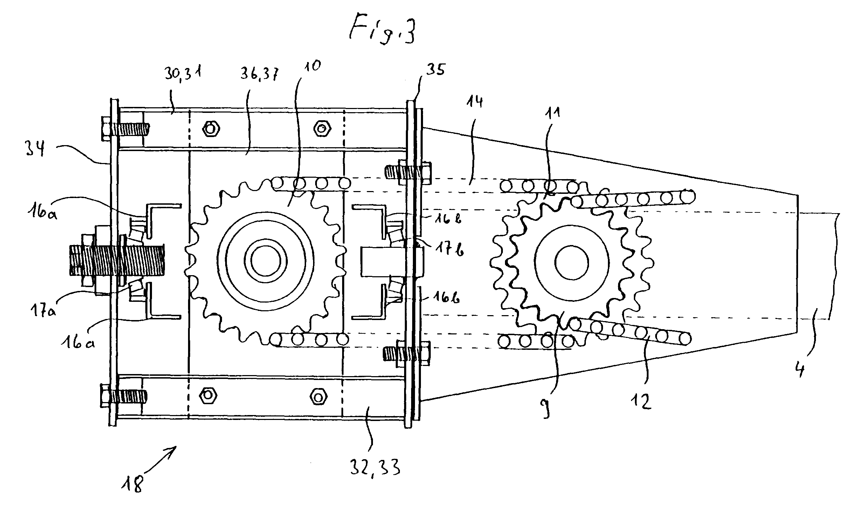

Figur 2 zeigt die Ausführungsform gemäß Fig. 1, gesehen gemäß Pfeil 25 in Fig. 1, wobei das Gestell 4 gegenüber dem Rahmen 16 verschwenkt ist.

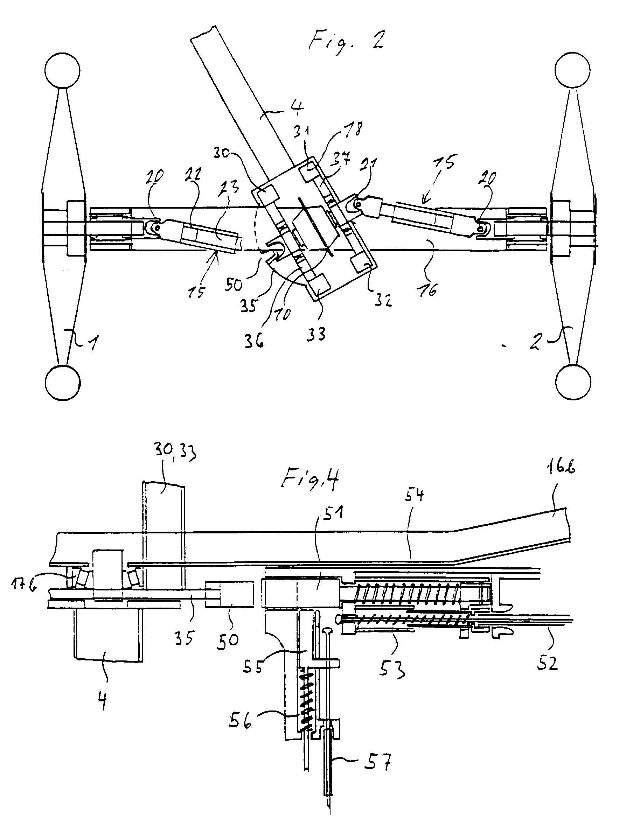

Figur 3 zeigt das hintere mittlere Teil der Ausführungsform gemäß Fig. 1 gemäß Pfeil 26 in Fig. 1. Man erkennt das Gestell 4, das zweite Zahnrad 9, die Kette 12, das dritte Zahnrad 11, die Kette 14, das vierte Zahnrad 10 und den dritten Träger 18, der an dem Gestell 4 festgeschraubt ist und in dem das Zahnrad 10 gelagert ist. Ferner ist an dem Träger 18 der Rahmen 16, bestehend aus den beiden Trägern 16a und 16b, gelagert, dies über die beiden Lager 17a und 17b.

Der Träger 18 besteht aus vier Holmen 30,31,32 und 33 (siehe auch Fig. 2), die zwischen zwei Platten 34 und 35 sitzen. Über die Platte 35 ist der Träger 18 an dem Gestell 4 festgeschraubt. Zwischen den Holmen 30 und 33 sitzt eine Platte 36; zwischen den Holmen 31 und 32 sitzt eine Platte 37. An den beiden Platten 36 und 37 und zwischen diesen ist das Zahnrad 10 gelagert.

Figur 4 zeigt den gestrichelt umrandeten Teil in Fig. 1 in vergrößertem Maßstab, und zwar zeigt sie einen dort untergebrachten Feststellmechanismus. Man erkennt zunächst den Träger 16b, das Lager 17b, die Platte 35, das Gestell 4 und die beiden untereinander angeordneten Holme 30 und 33. An der Platte 35 befindet sich eine Tasche 50 (in Fig. 2 ist die Tasche 50 und die Platte 35 ebenfalls zu erkenenn). In die Tasche 50 kann ein Riegel 51 eindringen. (Der Rahmen 16 ist dann gegenüber dem Gestell 4 verriegelt.) Das geschieht, wenn ein Bowdenzug 52 per Hand derart bewegt wird, daß eine Feder 53 und eine Feder 54 zusammengedrückt werden. Die Entriegelung, d.h. das Sich-Herausbewegen des Riegels 51 aus der Tasche 50, wird durch die Feder 54 bewirkt. Ferner ist eine Sperre vorgesehen, mit der diese Entriegelungsbewegung des Riegels 51 verhindert wird. Sie besteht aus einer Klinke 55, die, wenn sich der Riegel 51 in seiner linken Stellung, d.h. in seiner Verriegelungsstellung befindet, durch eine Feder 56 in bezug auf Fig. 4 nach oben bewegt wird. Die Klinke 55 kann aus dieser Verriegelungsposition mittels eines weiteren Bowdenzuges 57 herausbewegt werden, dies dadurch, daß sie in bezug auf Fig. 4 nach unten gegen die Kraft der Feder 26 bewegt wird. Erst dann kann sich der Riegel 51 in bezug auf Fig. 4 nach rechts in seine Entriegelungsstellung bewegen.

Der Antrieb des erfindungsgemäßen Dreirades kann über Muskelkraft, aber auch über einen Motor erfolgen.

## Patentansprüche

1. Dreirad, bestehend aus einem Rad (3) vorn, zwei hinten nebeneinander angeordneten Rädern (1,2), einem ersten vor der Hinterradachse angeordneten Träger (16b) zwischen diesen Rädern (1,2), der diese hält, einem Gestell (4) mit einem Sattel, das über zwei Lager (17a,17b) um eine etwa horizontale Achse schwenkbar mit dem Träger (16) verbunden ist, einer Gepäckaufnahme zwischen den Hinterrädern (1,2) und einem Antrieb für die Hinterräder (1,2), wobei letzterer ein vorderes, erstes, am Gestell (4) gelagertes Zahnrad (8), mindestens ein dahinter befindliches zweites, am Gestell (4) gelagertes Zahnrad (9), eine diese beiden Zahnräder umlaufende Kette (12), ein mit dem zweiten Zahnrad (9) drehfest verbundenes, auf derselben Welle (13) sitzendes drittes Zahnrad (11), ein auf der Welle der Hinterräder (1,2) sitzendes viertes Zahnrad (10) und eine das dritte und das vierte Zahnrad (10,11) umlaufende Kette (14) aufweist und wobei ein erstes Lager (17b) der beiden Lager (17a,17b) zwischen Gestell (4) und erstem Träger (16b) sitzt, **dadurch gekennzeichnet,** daß ein zweiter Träger (16a) hinter der Hinterradachse vorhanden ist, der mit dem ersten Träger (16b) einen die Räder (1,2) tragenden Rahmen (16) bildet, daß das zweite Lager (17a) zwischen Gestell (4) und zweitem Träger (16a) sitzt, daß das dritte und vierte Zahnrad (10,11) am Gestell (4) gelagert sind und auf der Schwenkachse der beiden Lager (17a,b) liegen und daß das vierte Zahnrad (10) die Hinterräder (1,2) über je eine Welle (15) antreibt, die über Universalgelenke (20,21) mit dem vierten Zahnrad (10) und einem Hinterrad (1,2) verbunden ist und aus zwei drehfest ineinandersteckenden, zueinander verschieblichen Teilen (22,23) besteht.

2. Dreirad nach Anspruch 1, **dadurch gekennzeichnet,** daß die beiden Lager (17a,b) an einem dritten Träger (18) befestigt sind, der am Gestell (4) befestigt ist und nach hinten ragt.

3. Dreirad nach Anspruch 2, **dadurch gekennzeichnet,** daß der dritte Träger (18) aus vier in Längsrichtung verlaufenden Holmen (30,31,32,33), aus zwei quer dazu angeordneten Platten (34,35), zwischen denen die Holme (30-33) verlaufen und die die gestellfesten Lagerteile der Lager (17a,b) tragen, und aus zwei quer zur Achse des vierten Zahnrades (10) angeordneten Platten (36,37) besteht, die an den Holmen (30,33 bzw. 31,32) befestigt sind und das vierte Zahnrad halten, wobei die das vierte Zahnrad haltenden Platten(36,37) in Längsrichtung kürzer sind als die Holme (30-33) derart, daß Platz für die Träger (16a,b) vorhanden ist.

4. Dreirad nach einem der Ansprüche 1 bis 3, **dadurch gekennzeichnet,** daß die beiden Träger (16a,b) des Rahmens (16) dicht neben den beiden Rädern (1,2) enden.

5. Dreirad nach einem der Ansprüche 1 bis 4, **dadurch gekennzeichnet,** daß das Gestell (4) eine Ausnehmung bildet, in der sich das dritte Zahnrad (11) befindet, und daß sich das zweite Zahnrad bzw. die zweiten Zahnräder (9) außerhalb dieser Ausnehmung befindet bzw. befinden.

6. Dreirad nach einem der Ansprüche 1 bis 5, **dadurch gekennzeichnet,** daß ein Mechanismus vorgesehen ist, mit dem die Verschwenkbarkeit zwischen Gestell (4) und Rahmen (16) verhindert werden kann.

## Claims

1. A tricycle comprising a front wheel (3), two rear wheels (1, 2) side by side, a first bearer (16b) in front of the axle of the rear wheels (1, 2) and disposed between them and holding them, a frame (4) with a saddle connected by two bearings (17a, 17b) to the bearer (16) so as to be pivotable around an approximately horizontal axis, a luggage-holder between the rear wheels (1, 2) and a drive for the rear wheels (1, 2), the drive comprising a front first gearwheel (8) mounted on the frame (4), at least one second gearwheel (9) behind the first wheel and mounted on the frame (4), a chain (12) around these two gearwheels, a third gearwheel (11) non-rotatably connected to the second gearwheel (9) and on the same shaft (13), a fourth gearwheel (10) mounted on the axle of the rear wheels (1, 2) and a chain (14) round the third and the fourth gearwheel (10, 11), and a first bearing (17b) out of the two bearings (17a, 17b) is disposed between the frame (4) and the first bearer (16b), **characterised in that** a second bearer (16a) is present behind the rear-wheel axle and co-operates with the first bearer (16b) to form a framework (16) bearing the wheels (1, 2), the second bearing (17a) is situated between the frame (4) and the second bearer (16a), the third and fourth gearwheel (10, 11) are mounted on the frame (4) and rest on the pivot of the two bearings (17a,b) and the fourth gearwheel (10) drives the rear wheels (1, 2) via respective axles (15) which are connected by universal joints (20, 21) to the fourth gearwheel (10) and a rear wheel (1, 2) and are made up of two parts (22, 23) which are non-rotatably inserted in one another and movable relative to one another.

2. A tricycle according to claim 1, **characterised in that** the two bearings (17a,b) are fastened to a third bearer (18) which is secured to the frame (4) and projects backwards.

3. A tricycle according to claim 2, **characterised in that** the third bearer (18) comprises four struts (30, 31, 32, 33) extending in the longitudinal direction, two plates (34, 35) disposed transversely thereto and between which the struts (30 - 33) extend and which bear those parts of the bearings (17a,b) which are attached to the frame, and two plates (36, 37) disposed transversely to the shaft of the fourth gearwheel (10) and secured to the struts (30, 33 or 31, 32) and holding the fourth gearwheel, and the plates (36, 37) holding the fourth gearwheel are shorter in the longitudinal direction than the struts (30, 33), so as to provide space for the bearers (16a,b).

4. A tricycle according to any one of claims 1 to 3, **characterised in that** the two bearers (16a,b) forming the framework (16) end closely alongside the two wheels (1, 2).

5. A tricycle according to any one of claims 1 to 4, **characterised in that** the frame (4) forms a recess containing the third gearwheel (11), and the second gearwheel or the second gearwheels (9) are disposed outside the recess.

6. A tricycle according to any one of claims 1 to 5, **characterised in that** a mechanism is provided for preventing the frame (4) pivoting relative to the framework (16).

## Revendications

1. Tricycle comprenant une roue (3) à l'avant, deux roues (1, 2) disposées l'une à côté de l'autre à l'arrière, une première poutre (16b) disposée en avant de l'essieu arrière, entre ces roues (1, 2), qui tient ces dernières, un cadre (4) muni d'une selle, qui est relié à la poutre (16) au moyen des deux paliers (17a, 17b) de façon à pouvoir pivoter autour d'un axe horizontal, un porte-bagages situé entre les roues arrière (1, 2), et un entraînement pour les roues arrière (1, 2), ce dernier comprenant lui-même une première roue dentée avant (8), montée sur le cadre (4), au moins une deuxième roue dentée (9), située en arrière, montée sur le cadre (4), une chaîne (12) qui embrasse ces deux roues dentées, une troisième roue dentée (11) reliée solidairement en rotation à la deuxième roue dentée (9), montée sur le même arbre (13), une quatrième roue dentée (10) montée sur l'arbre des roues arrière (1, 2) et une chaîne (14) qui embrasse les troisième et quatrième roues dentées (10, 11), un premier palier (17b) des deux paliers (17a, 17b) étant situé entre le cadre (4) et la première poutre (16b), caractérisé en qu'il est prévu, en arrière de l'essieu arrière, une deuxième poutre (16a) qui forme avec la première poutre (16b) un châssis qui porte les roues (1, 2), en ce que le deuxième palier (17a) est disposé entre le cadre (4) et la deuxième poutre (16a), en ce que les troisième et quatrième roues dentées (10, 11) sont montées sur le cadre (4) et se trouvent sur l'axe de pivotement des deux paliers (17a, 17b), et en ce que la quatrième roue dentée (10) entraîne les roues arrières (1, 2) par l'intermédiaire d'un arbre (15) pour chacune, arbre qui est relié à la quatrième roue dentée (10) et à une roue arrière (1, 2) par des joints articulés (20, 21), et est composée de deux parties (22, 23) emmanchées l'une dans l'autre solidairement en rotation coulissantes l'une par rapport à l'autre.

2. Tricycle selon la revendication 1, caractérisé en ce que les deux paliers (17a, b) sont fixés à une troisième poutre (18), laquelle est fixée au cadre (4) et fait saillie vers l'arrière.

3. Tricycle selon la revendication 2, caractérisé en ce que la troisième poutre (18) est composée de quatre longerons (30, 31, 32, 33) s'étendant dans la direction longitudinale, de deux plaques (34, 35) disposées transversalement à ces longerons, entre lesquelles les longerons (30-33) s'étendent, et qui portent les parties des paliers (17a, b) qui sont solidaires du cadre, et de deux plaques (36, 37) disposées transversalement à l'axe de la quatrième roue dentée (10), plaques qui sont fixées aux longerons (30, 33 ou 31, 32) et portent la quatrième roue dentée, les plaques (36, 37) qui portent la quatrième roue dentée étant plus courtes que les longerons (30-33) dans la direction longitudinale, de sorte qu'il reste de la place pour les poutres (16a, b).

4. Tricycle selon une des revendications 1 à 3, caractérisé en ce que les deux poutres (16a, b) du châssis se terminent très près des deux roues (1, 2).

5. Tricycle selon une des revendications 1 à 4, caractérisé en ce que le cadre (4) forme un évidement dans lequel se trouve la troisième roue dentée (11) et en ce que la deuxième roue dentée ou les deuxièmes roues dentés (9, 12) de trouve ou se trouvent en dehors dudit évidement.

6. Tricycle selon une des revendications 1 à 5, caractérisé en ce qu'il est prévu un mécanisme avec lequel la possibilité de pivotement entre le cadre(4) et le châssis (16) peut être annulée.
